# EUROPÄISCHE PATENTSCHRIFT

(11) **EP 2 553 021 B1**
(45) Veröffentlichungstag und Bekanntmachung des Hinweises auf die Patenterteilung: **07.05.2014**
(21) Anmeldenummer: 11711538.6
(22) Anmeldetag: 29.03.2011
(51) Int. Cl.: C08L 77/02, C08L 77/06, C08K 7/00, C08K 7/14, C08K 5/00, C08K 5/18

(54) **VERWENDUNG KORROSIONS- UND SPANNUNGSRISSBESTÄNDIGER POLYAMIDE**
USE OF POLYAMIDES THAT ARE RESISTANT TO CORROSION AND STRESS CRACKING
UTILISATION DE POLYAMIDE RÉSISTANT À LA CORROSION ET AUX FISSURES PAR CONTRAINTE

(30) Priorität: 30.03.2010 EP 10158447
(43) Veröffentlichungstag der Anmeldung: 06.02.2013
(73) Patentinhaber: BASF SE, 67056 Ludwigshafen (DE)
(72) Erfinder: KLATT, Martin, 68165 Mannheim (DE); PRUSTY, Manoranjan, 68167 Mannheim (DE); WILMS, Axel, 67227 Frankenthal (DE); BERNNAT, Anka, 67105 Schifferstadt (DE); BAUMERT, Martin, 69221 Dossenheim (DE); FERNANDEZ RODILES, Raquel, 69115 Heidelberg (DE); DESBOIS, Philippe, 68535 Edingen-Neckarhausen (DE); ENGELMANN, Jochen, 67434 Neustadt (DE); KIM, BS, Singapore 298190 (SG)
(86) Internationale Anmeldenummer: PCT/EP2011/054784
(87) Internationale Veröffentlichungsnummer: WO 2011/120949

(56) Entgegenhaltungen:
- EP-A1- 0 333 408
- EP-A1- 0 392 602
- EP-A1- 0 905 190
- GB-A- 1 226 964
- JP-A- 60 088 067

## Beschreibung

Die Erfindung betrifft die Verwendung von thermoplastischen Formmassen, enthaltend
A) 10 bis 98,8 Gew.-% einer Mischung aufgebaut aus
   a1) 40 bis 70 Gew.-% Polyamid 6.6 oder Polyamid 4.6 oder Polyamid 6 oder deren Mischungen,
   a2) 30 bis 60 Gew.-% eines Polyamides mit einem Verhältnis von Methylen- zu Amidgruppen von 7 bis 12,
B) 1 bis 50 Gew.-% eines faser- oder teilchenförmigen Füllstoffes,
C) 0,05 bis 3 Gew.% eines ionenfreien Schmiermittels,
D) 0,05 bis 3 Gew.-% eines Wärmestabilisators,
E) 0 bis 40 Gew.-% weiterer Zusatzstoffe,
wobei die Summe der der Gewichtsprozente A) bis E) sowie a1) und a2) 100 % ergibt, zur Herstellung von spannungsriss- und korrosionsbeständigen Formteilen.

Weiterhin betrifft die Erfindung die hierbei erhältlichen Formkörper jeglicher Art, insbesondere Kfz-Teile.

Es ist bekannt, dass Polyamide empfindlich sind für Spannungsrisskorrosion bei Kontakt mit bestimmten Substanzen, insbesondere bei Kontakt mit bestimmten Salzen, in der Regel in Kombination mit Wasser, wie z.B. Calciumchlorid und Zinkchlorid, siehe z.B. folgende Literatur.

Wyzgoski, Novak, J. Mat. Sci., 22, 1707-1714 (1987), Stress cracking of nylon polymers in aqueous salt solutions, part I: Stress rupture behaviour,

Wyzgoski, Novak, J. Mat. Sci., 22, 1715-1723 (1987), Stress cracking of nylon polymers in aqueous salt solutions, part II: Nylon - salt interactions,

Wyzgoski, Novak, J. Mat. Sci., 22, 2615-1623 (1987), Stress cracking of nylon polymers in aqueous salt solutions, part III: Craze growth kinetics,

Weiske, Kunststoffe, 54, 626-634 (1964), Chemische Beständigkeit und Spannungsrisskorrosion von Polyamiden.

Salze wie Calciumchlorid werden z.B. als Streusalz auf Straßen im Winter eingesetzt und können dann in Kontakt mit Kunststoff-Teilen kommen und Spannungsrisskorrosion verursachen, also bei gleichzeitiger Einwirkung von Spannungen auf die Kunststoffteile zu Rissbildung führen.

Es ist bekannt, Polyamide mit hoher Methylengruppenzahl bei einer Monomerkomponente (z.B. Polyamide mit Monomerkomponenten mit Methylengruppenzahlen von 9-12, wie z.B. PA6.10, PA12, PA6.12) mit Polyamiden mit niedriger Methylengruppenzahl in jeder Komponente (z.B. Methylengruppenzahlen von 4-6, wie z.B. PA6, PA6.6) zu mischen. Dies ist auch in folgenden Anmeldungen beschrieben:
- JP-A 57/080449
- JP-A 04/309561
- JP-A 60/088066

Der Stand der Technik beschreibt Mischungen von Polyamid 6.6 mit Polyamiden mit höherer Methylengruppenzahl in einer Monomerkomponente als für Polyamid 6.6. Es wird jedoch lediglich die Mischung der Polyamide als vorteilhaft für die chemische Beständigkeit beschrieben, nicht jedoch die Möglichkeit zur weiteren Verbesserung der chemischen Beständigkeit durch weitere Additive in diesen Mischungen. Weiterhin wird gemäß Anmeldung JP-A 04/309561 die besondere Beständigkeit der PolyamidMischungen durch Einstellung einer speziellen Schichtenstruktur in der Mischung erreicht. Weiterhin wird die Beständigkeit der Mischungen gemäß Anmeldung JP-A 60/088066 nur bei Einsatz von Polyamiden mit einem bestimmten Verhältnis der relativen Viskositäten der Einsatz-Polyamide erreicht.

Aufgabe der vorliegenden Erfindung war es daher, die verbesserte Verwendung von Polyamidformmassen zur Herstellung von Formteilen zu finden, die durch eine spezielle Additivkombination und Polymermatrix Formteile, insbesondere für den Kfz-Bereich ergeben, die eine bessere Spannungsrissbeständigkeit und Korrosionsbeständigkeit aufweisen.

Demgemäß wurde die eingangs definierte Verwendung gefunden. Bevorzugte Ausführungsformen sind den Unteransprüchen zu entnehmen.

Als Komponente A) enthalten die erfindungsgemäß verwendbaren Formmassen 10 bis 98,8, vorzugsweise 20 bis 94, und besonders bevorzugt 25 bis 89 Gew.-% einer Polyamidmischung aufgebaut aus:
a1) 40 bis 70 Gew.-%, vorzugsweise 60 bis 50 Gew.-% Polyamid 6.6 oder Polyamid 4.6 oder Polyamid 6 oder deren Mischungen,
a2) 30 bis 60 Gew.-%, vorzugsweise 50 bis 40 Gew.-% eines Polyamides mit einem Verhältnis von Methylen- zu Amidgruppen von 7 bis 12.

Geeignete Polyamide a2) sind aliphatische Polyamide PA 12, PA 6.12, PA 11, PA 12.12, PA 10.10, PA 6.11, PA 4.12, PA 9, PA 9.10, PA 9.12, wobei Polyamid 6.10 besonders bevorzugt ist.

Verfahren zur Herstellung derartiger Polyamide sind dem Fachmann bekannt, so dass sich weitere Angaben erübrigen.

Die Polyamide der erfindungsgemäßen Formmassen weisen im allgemeinen eine Viskositätszahl von 70 bis 350, vorzugsweise von 70 bis 200 ml/g auf, bestimmt in einer 0,5 gew.%-igen Lösung in 96 gew.-%iger Schwefelsäure bei 25°C gemäß ISO 307.

Als faser- oder teilchenförmige Füllstoffe B) seien Kohlenstofffasem, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 35 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
X NH₂-, 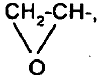 HO-,
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C) enthalten die erfindungsgemäßen Formmassen 0,05 bis 3, vorzugsweise 0,1 bis 1,5 und insbesondere 0,1 bis 1 Gew.-% eines ionenfreien Schmiermittels.

Bevorzugt sind Ester- oder Amide von Fettsäuren mit 10 bis 44 C-Atomen, vorzugsweise mit 12 bis 44 C-Atomen.

Die Schmiermittel C) weisen keine Metallionen auf, d.h. diese sind ionenfrei.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaeryth rittetrastearat.

Es können auch Mischungen verschiedener Ester oder Amide oder Ester mit Amiden in Kombination eingesetzt werden, wobei das Mischungsverhältnis beliebig ist.

Als eine weitere Gruppe bevorzugter Schmiermittel sind Polyolefinwachse zu nennen.

Unter Polypropylenwachsen versteht man im allgemeinen Polypropylene mit wachsartigem Charakter, welche entsprechend ein niedriges Molekulargewicht aufweisen.

Die erfindungsgemäßen Wachse weisen ein mittleres Molekulargewicht (Gewichtsmittel) Mw von 2000 bis 60000 (mittels GPC und Standard Polystyrol), vorzugsweise von 5000 bis 50000 und insbesondere von 10000 bis 45000 auf.

Der Erweichungspunkt der erfindungsgemäßen Wachse beträgt vorzugsweise mindestens 140°C, vorzugsweise mindestens 150°C, ermittelt gemäß DIN EN 1427 (Ring und Kugel Methode).

Die Viskosität der erfindungsgemäßen Wachse beträgt im Allgemeinen von 10 bis 5000 mPas, vorzugsweise von 100 bis 3000 mPas bei 170°C gemäß DIN 53018.

Die Dichte der erfindungsgemäßen Wachse beträgt üblicherweise von 0,87 bis 0,92 g/cm3, bevorzugt von 0,88 bis 0,91 g/cm3 gemäß DIN 53479.

Bevorzugte PP-Wachse haben die Form sog. Mikropulver, deren d50-Wert von 1 bis 50 µm, vorzugsweise von 5 bis 30 µm beträgt.

Unter unpolaren PP-Wachsen im Sinne der Erfindung versteht man gemäß Ullmann's Encyclopedia of Industrial Chemistry, 6. Auflage Stichwort 6.1.5 Polar Polyolefin waxes, Verlag Chemie, 2000 Wachse ohne den Einbau polarer Gruppen (insbesondere von Carboxyl- und/oder Estergruppen).

Die Herstellung der erfindungsgemäßen PP-Wachse kann in gerührten Hochdruckautoklaven oder in Hochdruckrohrreaktoren unter Einsatz von Reglern erfolgen. Die Herstellung in gerührten Hochdruckautoklaven ist bevorzugt. Die für das erfindungsgemäße Verfahren angewandten gerührten Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5 : 1 bis 30 : 1, bevorzugt 10 : 1 bis 20 : 1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Als weitere Herstellmethode ist gemäß Ullmann (s.o.) die Depolymerisation von Polypropylenen mit höheren Molmassen üblich.

Die im Handel erhältlichen PP-Wachse sind transluzente, farblose bis weiße Pulverprodukte, welche klare Schmelzen ergeben und in unpolaren Lösungsmitteln löslich sind.

Bevorzugte Produkte sind Licowax® PP insbesondere Licowax PP 230 und Licowax VP PP-Typen (der Firma Clariant GmbH) und Ceridust® VP 6071 sowie die LC 525 N, LC 502 N, LC 502 NC, LC 503 N, LC 503 NC-Typen der Firma Hana Corporation, Korea.

Polyethylenwachse (PE-Wachse) sind erhältlich durch radikalische Polymerisation im Hochdruckverfahren oder in Gegenwart von metallorganischen Katalysatoren in einem Niederdruckprozess hergestellte Kohlenwasserstoffwachse mit einem mittleren Molmassenbereich von 2000 - 20000 (Massenmittel). Daneben können niedrigmolekulare Produkte mit Wachscharakter durch thermischen Abbau aus hochmolekularem Polyethylen gewonnen werden.

In der Regel werden Polyethylenwachse nicht nach dem Herstellungsverfahren, sondern eher nach Dichte in HDPE (high density polyethylene) und LDPE (low density polyethylene) klassifiziert, wobei das Hochdruckverfahren HDPE, und das Niederdruckverfahren LDPE-Qualitäten ergibt.

Je nach Produktionsverfahren erhält man unterschiedliche Eigenschaftsbilder:

| | Hochdruck-PE-Wachse (HDPE) | Niederdruck-PE-Wachse (LDPE) |
|---|---|---|
| Schmelzbereich [°C] | 96-105 | 117-135 |
| Dichte [p] | 0,92 - 0,95 (23°C) | 0,96 - 0,98 (20°C) |
| Kristallinität | gering, Verzweigung ausgeprägt | hoch, Sprödigkeit, Härte, im wesentlichen geradkettig |

Die Eigenschaften der thermisch abgebauten PE-Wachse ähneln denjenigen der Hochdruckprodukte. Durch geänderte Verfahrensführung sind auch verzweigte Typen niederer Dichte (LDPE) erhältlich.

Durch Oxidation mit Luft oder Sauerstoff werden höherpolare oxidierte PE-Wachse (Polyethylenwachs-Oxidate) erhalten.

Als Ausgangsstoffe für derartige Oxidationsverfahren kommen alle üblichen Polyolefinwachse in Betracht, also beispielsweise durch Ziegler- oder Phillipskatalyse oder durch Hochdruckverfahren hergestellte Polyolefinwachse. Die zugrunde liegenden Wachse können direkt einem Polymerisationsverfahren entnommen werden oder durch thermische Spaltung höhermolekularer Olefinpolymerisate erhalten werden.

Gut geeignete Wachse leiten sich beispielsweise von Ethylen und/oder C3-C10-Alk-1-enen ab, wie von Propylen, 1-Buten, 1-Penten, 1-Hexen, 1-Hepten, 1-Octen, 1-Nonen und 1-Decen. Vorzugsweise werden als Polyolefinwachse Homo- oder Copolymerisate des Ethylens oder Propylens, besonders bevorzugt solche des Ethylens eingesetzt.

Zur Herstellung der zugrunde liegenden Polyolefinwachse können die Monomeren homopolymerisiert werden, oder in jedem Verhältnis miteinander copolymerisiert werden. Bevorzugte Polyolefine, die den oxidierten Wachsen zugrunde liegen, sind Ethylenhomopolymerisate mit einer Dichte im Bereich von 0,89 bis 0,98 g/cm³, vorzugsweise im Bereich von 0,90 bis 0,96 g/cm₃ und einem M_{w}, bestimmt mit der Methode der GPC in 1,2,4-Trichlorbenzol bei 135°C mit Polyethylen- oder Polypropylen-standard, im Bereich von 1000 bis 40 000 g/mol, vorzugsweise im Bereich von 2000 bis 20000 g/mol.

Weiterhin eignen sich als Ausgangspolyolefine Ethylen/C₃- bis C₁₀-Alk-1-en-copolymerisate mit einem Gesamtgehalt an auf das Alk-1-en oder die Alk-1-ene zurückgehenden Struktureinheiten im Copolymeren im Bereich von 0,1 bis 15 mol-%, vorzugsweise im Bereich von 1 bis 10 mol-%, bezogen auf das Copolymere. Bevorzugte Ethylen/Alk-1-en-copolymerisate sind Ethylen/Propylen-Copolymerisate mit einem Gehalt an auf das Propylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Copolymerisate haben im allgemeinen ein M_{w}, bestimmt mit der Methode der GPC wie oben beschrieben, im Bereich von 1000 bis 40000 g/mol, vorzugsweise im Bereich von 2000 bis 20000 g/mol.

Weitere bevorzugte Polyolefine, die den oxidierten Wachsen zugrunde liegen können, sind isotaktische Propylen-Homopolymerisate mit einem Pentadengehalt (Gehalt an isotaktischen Pentaden), bestimmt mit der Methode der ¹³C-NMR-Spektroskopie, im Bereich von 90 bis 98 % und einem M_{w}, bestimmt mit der Methode der GPC wie oben beschrieben, im Bereich von 1000 bis 40000 g/mol, vorzugsweise im Bereich von 2000 bis 20000 g/mol.

Außerdem eigenen sich auch Copolymerisate des Propylens mit Ethylen und /oder C₄-bis C₁₀-Alk-1-enen als Basispolyolefine. Diese Propylencopolymerisate haben üblicherweise einem Gesamt-Gehalt an, auf das Ethylen und/oder die C₄- bis C₁₀-Alk-1-ene zurückgehenden, Struktureinheiten im Copolymeren im Bereich von 0,1 bis 15 mol-%, vorzugsweise im Bereich von 1 bis 10 mol-%, bezogen auf das Copolymere. Bevorzugte Propylencopolymere sind Propylen/Ethylen-Copolymerisate mit einem Gehalt an auf das Ethylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Propylencopolymerisate haben im allgemeinen ein M_{w}, bestimmt mit der Methode der GPC wie oben beschrieben, im Bereich von 1000 bis 40000 g/mol, vorzugsweise im Bereich von 1000 bis 20000 g/mol.

Die Säurezahl der bevorzugten oxidierten Wachse (gemäß DIN 5340 2, bzw. DIN EN D 1386) beträgt bevorzugt von 11 bis 100, vorzugsweise von 12 bis 55 und insbesondere von 12 bis 30 [mg KOH/g]. Die Verseifungszahl beträgt bevorzugt von 11 bis 100, vorzugsweise von 10 bis 50 und insbesondere von 20 bis 30 [mg KOH/g] (gemäß DIN EN D-1387).

Verfahren zur Herstellung sind dem Fachmann bekannt, so dass sich weitere Angaben hierzu erübrigen.

Als Komponente D) enthalten die erfindungsgemäßen Formmassen 0,05 bis 3, vorzugsweise 0,1 bis 1,5 und insbesondere 0,1 bis 1 Gew.-% eines Wärmestabilisators, vorzugsweise eines Cu-Stabilisators, vorzugsweise eines Cu-(I)-Halogenids, insbesondere in Mischung mit einem Alkalihalogenid, vorzugsweise KJ, insbesondere im Verhältnis 1 : 4.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Bevorzugte Stabilisatoren sind aromatische sekundäre Amine in Mengen von 0,05 bis 3, vorzugsweise von 0,5 bis 1,5 und insbesondere von 0,5 bis 1 Gew.-%, gemäß der allgemeinen Formel I: 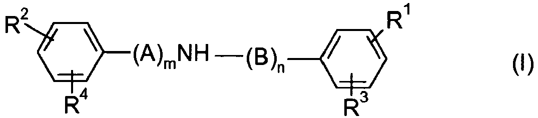 wobei
- m,n =: 0 oder 1 ,
- A und B =: durch C₁-C₄-Alkyl oder Phenyl substituiertes tertiäres C-Atom,
- R¹, R2 =: Wasserstoff oder eine C₁-C₆-Alkylgruppe in ortho- oder para-Stellung, welcher gegebenenfalls substituiert sein kann durch 1 bis 3 Phenylreste, Halogen, Carboxylgruppe oder ein Übergangsmetallsalz dieser Carboxylgruppe, und
- R³, R⁴ =: Wasserstoff oder ein Methylrest in ortho- oder para-Position, wenn m plus n für 1 steht oder eine tertiäre C₃-C₉-Alkylgruppe in ortho- oder Para-Position, welche gegebenenfalls durch 1 bis 3 Phenylreste substituiert sein kann, wenn m plus n für 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-Butyl, wobei die Methylgruppen vorzugsweise durch 1 bis 3 Phenylgruppen ersetzt sein können. Bevorzugte Halogene sind Chlor und Brom. Übergangsmetalle sind beispielsweise - welche mit R¹ oder R² = Carboxyl Übergangsmetallsalze bilden können.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine D) sind
4,4'-Bis(α,α'- tertiäroctyl)diphenylamin
4,4'Bis(α,α-dimethylbenzyl)diphenylamin
4,4'-Bis(α-methylbenzhydryl)diphenylamin
4-((1,1,3,3-Tetramethylbutyl)4'-triphenylmethyldiphenylamin
4,4'-Bis(α,α-p-trimethylbenzyl)diphenylamin
2,4,4'-Tris(α,α-dimethylbenzyl)diphenylamin
2,2'-Dibromo,4,4'- bis(α,α-dimethyl benzyl)diphenylamin
4,4'-Bis(α,α-dimethylbenzyl)-2-carboxydiphenylamin-nickel-4,4'-bis(α,α-dimethylbenzyl)-diphenylamin
2-sec-Butyl-4,4'-bis(α,α-dimethylbenzyl)diphenylamin
4,4'-Bis(α,α-dimethylbenzyl)-2-(α-methylheptyl)diphenylamin
2-((α-Methylpentyl)4,4'-ditrityldiphenylamin
4-α,α-Dimethylbenzyl-4'-isopropoxydiphenylamin
2-((α-Methylheptyl)-4'-(α,α-dimethylbenzyl)diphenylamin
2-((α-Methylpentyl)-4'- trityldiphenylamin
4,4'-Bis(tertiary-butyl)diphenylamin sowie:

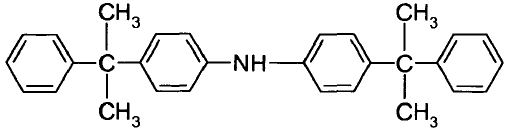

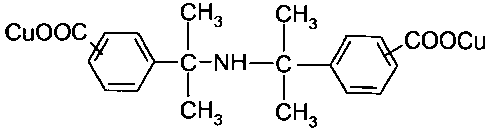

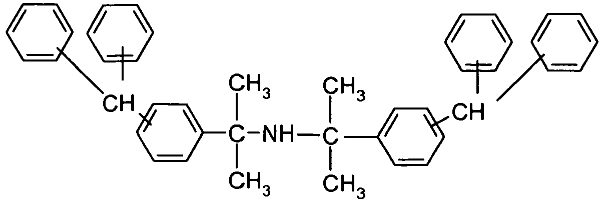

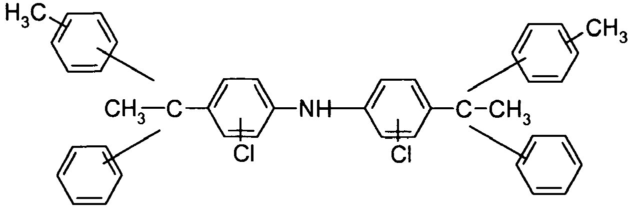

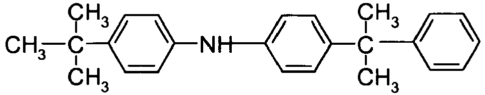

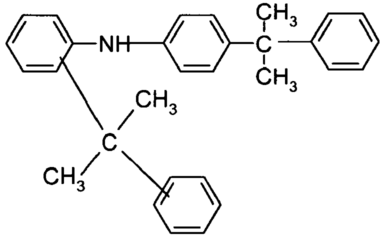

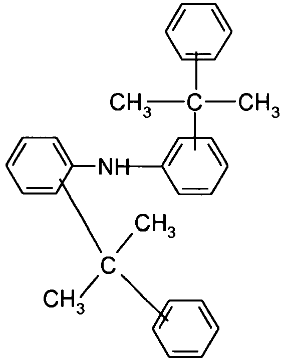

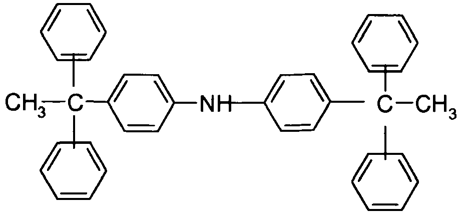

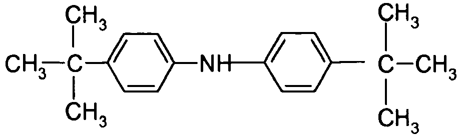

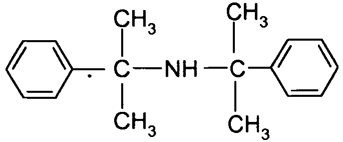

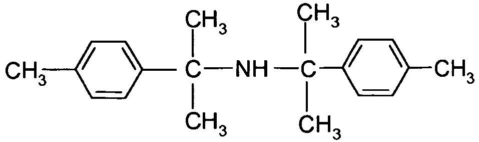

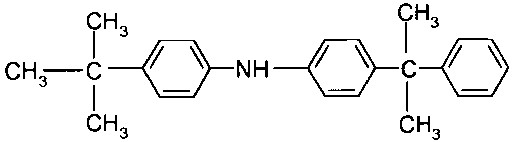

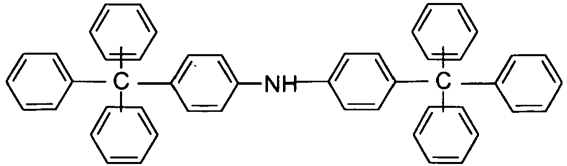

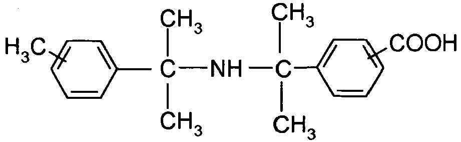

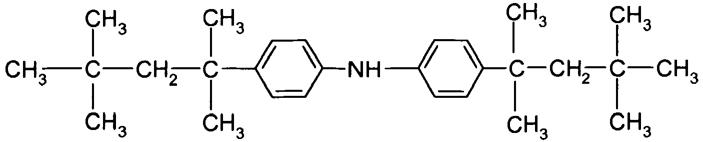

Die Herstellung erfolgt gemäß den in der BE-A 67/05 00 120 und CA-A 9 63 594 beschriebenen Verfahren. Bevorzugte sekundäre aromatische Amine sind Diphenylamin und dessen Derivate, welche als Naugard® (Firma Chemtura) im Handel erhältlich sind.

Als weitere Komponente E) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleitund Entformungsmittel, Färbemittel wie Farbstoffe und Pigmente, Keimbildungsmittel, Weichmacher, Flammschutzmittel, Kautschuke in Mengen bis zu 40, vorzugsweise bis zu 20 Gew.-% enthalten.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte FS-Mittel-Systeme und deren Synergisten genannt.

Als Kautschuke seien Ethylencopolymere, EP und EPDM sowie Kern-Schale-Polymere genannt.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie D) sowie gegebenenfalls E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die efindungsgemäßen verwendbaren Formmassen zeichnen sich durch gute Spannungsriss- und Korrosionsstabilität aus, insbesondere gegenüber Salzen, vor allem gegenüber CaCl₂ und/oder Zinkchlorid oder deren wässrigen Lösungen.

Diese eignen sich zur Herstellung von Fasern, Folien und Formkörpem jeglicher Art. Nachfolgend sind einige bevorzugte Beispiele genannt:
Haushaltsartikel, elektronische Bauteile, medizinische Geräte, Kfz-Bauteile, Gehäuse von Elektrogeräten, Gehäuse von Elektronik-Komponenten im Kfz, Kotflügel, Türbeplankung, Heckklappen, Spoiler, Ansaugrohre, Wasserkästen, Tanks, Lüfterräder und -gehäuse, Schläuche, Pumpenteile, Ölwannen, Motorträger, Gehäuse von Elektrowerkzeugen, Gehäuse von Elektronikkomponenten, Überspritzung von Elektronikkomponenten (z.B. Spulen, Platinen, Sensoren).

### Beispiele

Es wurden folgende Komponenten verwendet:

### Komponente a1):

Polyamid 66 mit einer Viskositätszahl VZ von 180 ml/g, gemessen als 0,5 gew.-%ige Lösung in 96 gew.-%iger Schwefelsäure bei 25°C nach ISO 307. (Es wurde Ultramid® A27 E der BASF SE verwendet).

### Komponente a2):

Polyamid 6.10 mit einer Viskositätszahl VZ von 144 ml/g, gemessen als 0,5 gew.-%ige Lösung in 96 gew.-%iger Schwefelsäure bei 25°C nach ISO 307. (Es wurde Stabamid® 7030 der Nexis Fiber AG verwendet).

### Komponente B

Schnittglasfaser für PA, 10 mic Durchmesser.

### Komponente C

C/1 Calciumstearat (zum Vergleich)
C/2 Montansäure
C/3 Oxidiertes Polyethylenwachs (Luwax® OA 5 BASF SE)

Molgewicht (GPC) 5400
Schmelzpunkt (DIN 51007 D-3418) 102 - 100°C
Tropfpunkt (DIN 51801 D-3954) 107 - 113°C
Säurezahl (DIN EN D-1386) 15-19 [mg KOH/g]
Verseifungszahl (DIN EN D-1387) 20 - 30 [mg KOH/g].

### Wärmestabilisator D/1

Diphenylamin 4,4-Bis(1,1-dimethylbenzyl)

### D/2

CuJ/KJ molares Verhältnis 1:4

### Rußbatch E/1

Rußbatch mit 33 Gew.-% Ruß und 67 Gew.-% Polyethylen

### Schwarzbatch E/2

40 Gew.-% Nigrosin Base SAPL (es wurde Nigrosin der Fa. Orient Chemicals verwendet) und 60 Gew.-% PA6

### Verarbeitungsbedingungen Compoundierung

Die Komponenten wurden auf einem Zweischneckenextruder (ZSK40) bei 290°C (flaches Temperaturprofil, 30 kg/h Durchsatz), abgemischt und in ein Wasserbad extrudiert, granuliert und getrocknet.

### Verarbeitungsbedingungen Spritzguss

Das getrocknete Granulat wurde auf einer Spritzgussanlage bei 290°C Schmelzetemperatur (Werkzeug-Temperatur 80°C) zu Standard-ISO-Schulterstäben (4 mm Dicke) und zu Standard-ISO-Schulterstäben mit Bindenaht in der Mitte der Stäbe (4 mm Dicke) (Stäbe wie für Zugversuche gemäß ISO 527-2/1 A/5) verarbeitet.

### CaCl₂-Spannungsriss-Tests

- CaCl₂-Spannungsriss-Test mit Standard-ISO-Schulterstäben
- Probekörper : Standard-ISO-Schulterstab (4 mm Dicke)
- Vorkonditionierung: Schulterstab nach Spritzguss in Wasser getaucht lagern bei 80°C für 6 Tage, dann bei 80°C im Trockenschrank trocknen unter Stickstoff-Fluss
- Nach der Vorkonditionierung den Schulterstab auf eine Biegeschablone mit spannen, so dass die Randfaserdehnung des Stabs 2 % beträgt

### Zyklische Behandlung:

- Schulterstab auf Biegeschablone in gesättigte CaCl₂-Lösung (Raumtemperatur) für 30 min tauchen
- Schulterstab auf Biegeschablone 2h bei 130°C im Trockenschrank lagern
- Schulterstab auf Biegeschablone 4h in Raumluft (Raumtemperatur) lagern
- Schulterstab auf Biegeschablone 17,5h in Klimaschrank bei 50°C und 95% Luftfeuchtigkeit lagern

Die Zyklische Behandlung fünfmal wiederholen. Beurteilung: Anzahl der komplett durchlaufenen Zyklen bis zum Total-Bruch eines Stabes auf der Biegeschablone
- CaCl₂-Spannungsriss-Test für Schulterstäbe mit Bindenaht
- Probekörper : Schulterstab mit Bindenaht (4 mm Dicke)
- Den spritzgegossenen Schulterstab auf eine Biegeschablone spannen, so dass die Randfaserdehnung des Stabs 1 % beträgt

### Zyklische Behandlung:

- Schulterstab auf Biegeschablone in gesättigte CaCl₂-Lösung (Raumtemperatur) für 30 min tauchen
- Schulterstab auf Biegeschablone 2h bei 130°C im Trockenschrank lagern
- Schulterstab auf Biegeschablone 4h in Raumluft (Raumtemperatur) lagern
- Schulterstab auf Biegeschablone 17,5h in Klimaschrank bei 50°C und 95 % Luftfeuchtigkeit lagern

Die Zyklische Behandlung fünfmal wiederholen. Beurteilung: Anzahl der komplett durchlaufenen Zyklen bis zum Total-Bruch eines Stabes auf der Biegeschablone

**Tabelle 1: Blends aus PA6.6 und PA6.10 im Vergleich zu reinem PA6.6**

| Beispiel | 1V | 2V | 3V | 4V |
|---|---|---|---|---|
| Komponente [Gew.%] | | | | |
| | | | | |
| a1 | 67,88 | 50,92 | 40,70 | 33,96 |
| a2 | - | 16,96 | 27,18 | 33,92 |
| B | 30,00 | 30,00 | 30,00 | 30,00 |
| Calciumstearat C/1 | 0,25 | 0,25 | 0,25 | 0,25 |
| Wärmestabilisator D/1 | 0,70 | 0,70 | 0,70 | 0,70 |
| E/1 | 0,67 | 0,67 | 0,67 | 0,67 |
| E/2 | 0,50 | 0,50 | 0,50 | 0,50 |
| Total | 100,00 | 100,00 | 100,00 | 100,00 |
| | | | | |
| CaCl₂-Test (Anzahl insgesamt gebrochener Stäbe bis zum Abschluss des betreffenden Zyklus) (Insgesamt 5 Stäbe pro Material eingesetzt) (Test mit Standard-Zugstäben) | | | | |
| 1. Zyklus | 5 | 5 | 0 | 0 |
| 2. Zyklus | - | - | 0 | 0 |
| 3. Zyklus | - | - | 0 | 0 |
| 4. Zyklus | - | - | 0 | 0 |
| 5. Zyklus | - | - | 0 | 0 |

**Tabelle 2: Cu-stabilisierte Blends aus PA6.6 und PA6.10 im Vergleich zu nicht-Custabilisierten Blends)**

| Beispiel | 5V | 6V |
|---|---|---|
| Komponente [Gew.%] | | |
| | | |
| a/1 | 34,29 | 34,16 |
| a/2 | 34,29 | 34,15 |
| B | 30,00 | 30,00 |
| C/1 | 0,25 | 0,25 |
| D/2 | - | 0,27 |
| E/1 | 0,67 | 0,67 |
| E/2 | 0,50 | 0,50 |
| Gesamtmenge | 100,00 | 100,00 |
| | | |
| CaCl₂-Test (Anzahl insgesamt gebrochener Stäbe bis zum Abschluss des betreffenden Zyklus) (Insgesamt 5 Stäbe pro Material eingesetzt) (Test mit Zugstäben mit Bindenaht) | | |
| 1. Zyklus | 0 | 0 |
| 2. Zyklus | 4 | 3 |
| 3. Zyklus | 4 | 4 |
| 4. Zyklus | 4 | 4 |
| 5. Zyklus | 5 | 4 |

**Tabelle 3:**

| Beispiel | 7V | 8V | 1 | 2 |
|---|---|---|---|---|
| Komponente [Gew.%] | | | | |
| | | | | |
| a/1 | 40,70 | 40,70 | 40,70 | 40,70 |
| a/2 | 27,13 | 26,5 | 27,13 | 27,13 |
| B | 30,00 | 30,00 | 30,00 | 30,00 |
| C/1 | 0,30 | 0,93 | - | - |
| C/2 | - | - | - | 0,30 |
| C/3 | - | - | 0,30 | - |
| D/1 | 0,70 | 0,70 | 0,70 | 0,70 |
| E/1 | 0,67 | 0,67 | 0,67 | 0,67 |
| E/2 | 0,50 | 0,50 | 0,50 | 0,50 |
| Total | 100,00 | 100,00 | 100,00 | 100,00 |
| | | | | |
| CaCl₂-Test (Anzahl insgesamt gebrochener Stäbe bis zum Abschluss des betreffenden Zyklus) (Insgesamt 5 Stäbe pro Material eingesetzt) (Test mit Zugstäben mit Bindenaht) | | | | |
| 1. Zyklus | 1 | 5 | 2 | 2 |
| 2. Zyklus | 5 | - | 2 | 3 |
| 3. Zyklus | - | - | 2 | 4 |
| 4. Zyklus | - | - | 5 | 4 |
| 5. Zyklus | - | - | 5 | 4 |

## Patentansprüche

1. Verwendung von thermoplastischen Formmassen, enthaltend
A) 10 bis 98,8 Gew.-% einer Mischung aufgebaut aus
a1) 40 bis 70 Gew.-% Polyamid 6.6 oder Polyamid 4.6 oder Polyamid 6 oder deren Mischungen,
a2) 30 bis 60 Gew.-% eines Polyamides mit einem Verhältnis von Methylen- zu Amidgruppen von 7 bis 12,
B) 1 bis 50 Gew.-% eines faser- oder teilchenförmigen Füllstoffes,
C) 0,05 bis 3 Gew.% eines ionenfreien Schmiermittels,
D) 0,05 bis 3 Gew.% eines Wärmestabilisators,
E) 0 bis 40 Gew.-% weiterer Zusatzstoffe,
wobei die Summe der der Gewichtsprozente A) bis E) sowie a1) und a2) 100 % ergibt, zur Herstellung von spannungsriss- und korrosionsbeständigen Formteilen.

2. Verwendung nach Anspruch 1, wobei die thermoplastischen Formmassen zur Herstellung von Formkörpern eingesetzt werden, welche gegen CaCl₂ und/oder Zinkchlorid oder deren wässrige Lösungen beständig sind.

3. Verwendung nach den Ansprüchen 1 oder 2, wobei die Komponenten
a1) in Mengen von 60 bis 50 Gew.% und
a2) in Mengen von 40 bis 50 Gew.-%
bezogen auf 100 % A) in den Formmassen enthalten ist.

4. Verwendung nach den Ansprüchen 1 bis 3, wobei die Komponente C) ein oxidiertes Polyolefinwachs oder eine höhere Fettsäure mit 10 bis 44 C-Atomen ist.

5. Verwendung nach den Ansprüchen 1 bis 4, wobei die Komponente D) aus CuJ/KJ im molaren Verhältnis 1:4 aufgebaut ist.

6. Verwendung nach den Ansprüchen 1 bis 5, wobei die Komponente D) aus einem aromatischen sekundären Amin aufgebaut ist.

7. Formkörper, Fasern, Folien erhältlich aus den verwendbaren Formmassen gemäß den Ansprüchen 1 bis 6.

8. Formkörper gemäß Anspruch 7, wobei diese als Haushaltsartikel, elektronische Bauteile, medizinische Geräte, Kfz-Bauteile, Gehäuse von Elektrogeräten, Gehäuse von Elektronik-Komponenten im Kfz, Kotflügel, Türbeplankung, Heckklappen, Spoiler, Ansaugrohre, Wasserkästen, Tanks, Lüfterräder und -gehäuse, Schläuche, Pumpenteile, Ölwannen, Motorträger, Gehäuse von Elektrowerkzeugen, Gehäuse von Elektronikkomponenten, Überspritzung von Elektronikkomponenten (z.B. Spulen, Platinen, Sensoren) eingesetzt werden.

## Claims

1. The use of thermoplastic molding materials comprising
A) 10 to 98.8% by weight of a mixture formed from
a1) 40 to 70% by weight of nylon-6,6 or nylon-4,6 or nylon-6 or mixtures thereof,
a2) 30 to 60% by weight of a polyamide having a ratio of methylene to amide groups of 7 to 12,
B) 1 to 50% by weight of a fibrous or particulate filler,
C) 0.05 to 3% by weight of an ion-free lubricant,
D) 0.05 to 3% by weight of a heat stabilizer,
E) 0 to 40% by weight of further additives,
where the sum of the percentages by weight A) to E) and a1) and a2) adds to 100%, for production of stress cracking- and corrosion-resistant moldings.

2. The use according to claim 1, wherein the thermoplastic molding materials are used to produce moldings which are resistant to CaCl₂ and/or zinc chloride or aqueous solutions thereof.

3. The use according to claim 1 or 2, wherein component
a1) is present in amounts of 60 to 50% by weight and
a2) is present in amounts of 40 to 50% by weight in the molding materials, based on 100% of A).

4. The use according to claims 1 to 3, wherein component C) is an oxidized polyolefin wax or a higher fatty acid having 10 to 44 carbon atoms.

5. The use according to claims 1 to 4, wherein component D) is formed from CuI/KI in a molar ratio of 1:4.

6. The use according to claims 1 to 5, wherein component D) is formed from an aromatic secondary amine.

7. A molding, fiber or film obtainable from the usable molding materials according to claims 1 to 6.

8. The molding according to claim 7, which is used as a domestic item, electronic component, medical appliance, motor vehicle component, housing of an electrical appliance, housing of an electronic component in a motor vehicle, wheel surround, door panel, tail gate, spoiler, intake manifold, water tank, other tank, fan impeller or casing, hose, pump component, oil sump, engine mount, housing of a power tool, housing of electronic components, insert molding of electronic components (e.g. coils, circuit boards, sensors).

## Revendications

1. Utilisation de masses de moulage thermoplastiques, contenant
A) 10 à 98,8% en poids d'un mélange de
a1) 40 à 70% en poids de polyamide 6.6 ou de polyamide 4.6 ou de polyamide 6 ou de leurs mélanges,
a2) 30 à 60% en poids d'un polyamide présentant un rapport de groupes méthylène à groupes amide de 7 à 12,
B) 1 à 50% en poids d'une charge sous forme de fibres ou de particules,
C) 0,05 à 3% en poids d'un lubrifiant exempt d'ions,
D) 0,05 à 3% en poids d'un stabilisant thermique,
E) 0 à 40% en poids d'autres additifs,
la somme des pourcentages en poids de A) à E) ainsi que de a1) et de a2) valant 100%, pour la production de pièces moulées exemptes de fissures de tension et résistant à la corrosion.

2. Utilisation selon la revendication 1, les masses de moulage thermoplastiques pouvant être utilisées pour la production de corps moulés qui résistent au CaCl₂ et/ou au chlorure de zinc ou à leurs solutions aqueuses.

3. Utilisation selon les revendications 1 ou 2, le composant
a1) étant contenu en des quantités de 60 à 50% en poids et
a2) étant contenu en des quantités de 40 à 50% en poids
par rapport à 100% de A) dans les masses de moulage.

4. Utilisation selon les revendications 1 à 3, le composant C) étant une cire de polyoléfine oxydée ou un acide gras supérieur, comprenant 10 à 44 atomes de carbone.

5. Utilisation selon les revendications 1 à 4, le composant D) étant formé de CuI/KI dans un rapport molaire 1:4.

6. Utilisation selon les revendications 1 à 5, le composant D) étant formé d'une amine secondaire aromatique.

7. Corps moulés, fibres, feuilles pouvant être obtenus à partir des masses de moulage utilisables selon les revendications 1 à 6.

8. Corps moulés selon la revendication 7, ceux-ci étant utilisés comme articles ménagers, pièces électroniques, appareils médicaux, pièces pour véhicules automobiles, logements d'appareils électriques, logements de composants électroniques dans les véhicules automobiles, ailes, panneaux extérieurs de porte, hayons, spoilers, tuyaux d'aspiration, citernes à eau, réservoirs, hélices et logements de ventilateur, flexibles, pièces de pompe, carters d'huile, supports moteur, logements d'outils électriques, logements de composants électroniques, surmoulage de composants électroniques (par exemple bobines, plaquettes, capteurs).
